# EUROPEAN PATENT APPLICATION

(11) **EP 2 546 137 A1**
(43) Date of publication of application: **16.01.2013**
(21) Application number: 11005745.2
(22) Date of filing: 14.07.2011
(51) Int. Cl.: B63B 9/04, B63B 35/00

(54) **Tanker conversion**

(71) Applicant: Leenaars, Cees Eugen Jochem, 3224 AB Hellevoetsluis (NL)
(72) Inventor: Leenaars, Cees Eugen Jochem, 3224 AB Hellevoetsluis (NL)

(57) **Abstract**

The invention relates to the conversion of an existing tanker for windmill installation or removal work offshore by adding lifting capacity and positioning aids.

## Description

### Background of the invention

There is an increasing demand for the installation of windmills and windmill foundations in medium water depth. An economical solution is the conversion of an existing tanker to windmill installation vessel by adding cranes and positioning aids.

The motions during installation conditions are low due to the size of the vessel. The vessel can mobilize/ demobilize with large offshore structures on the deck. The conversion costs are low.

### Description of the invention

The invention relates to the conversion of an existing tanker to windmill and windmill foundation installation vessel by adding cranes/ means of lifting and aids to stay in position during installation work.

Possible means of lifting:
1. Gantry / Shearleg crane
2. A-frame
3. Rotating mast crane
4. Pair of rotating mast cranes

The positioning aids can consist of:
1. Spud poles
2. Anchors and anchor winches
3. Thrusters with a dynamic positioning system

### Description of the drawings

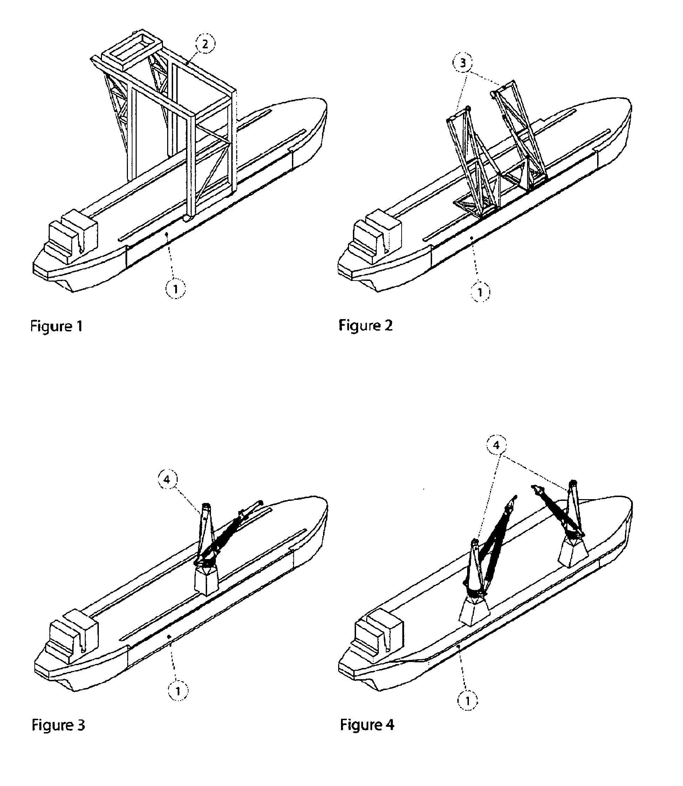

- Figure 1:: Is a 3 dimensional view of a converted tanker (1) with a gantry crane (2).
- Figure 2:: Shows the converted tanker (1) with an A-frame (3).
- Figure 3:: Shows the converted tanker (1) with a single rotating mast crane (4).
- Figure 4:: Shows the converted tanker (1) with a pair of rotating mast cranes (4).

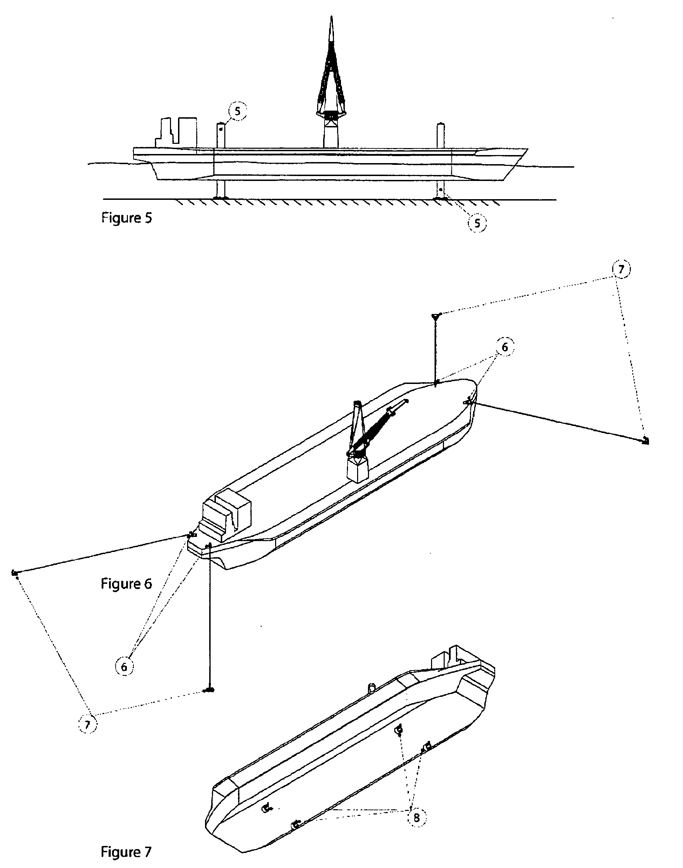

- Figure 5:: Is a profile view of the converted tanker (1) positioned by two spud poles (5).
- Figure 6:: Is a 3 dimensional view of a converted tanker being held in place by a system of anchors (7) and anchor winches (6).
- Figure 7:: Is a 3 dimensional view of the bottom of a converted tanker showing thrusters (8) with a dynamic positioning system.

## Claims

1. The conversion of an existing tanker that is outfitted with cranes and positioning aids to perform windmill and windmill foundation installation and removal work offshore.
